# EUROPÄISCHE PATENTANMELDUNG

(11) **EP 1 887 765 A1**
(43) Veröffentlichungstag der Anmeldung: **13.02.2008**
(21) Anmeldenummer: 06016824.2
(22) Anmeldetag: 11.08.2006
(51) Int. Cl.: H04M 1/21, H04M 1/18

(54) **Kombination von Mobiltelefon und Feuerzeug**

(71) Anmelder: Wiegand, Frank, 40789 Monheim am Rhein (DE)
(72) Erfinder: Wiegand, Frank, 40789 Monheim am Rhein (DE)

(57) **Zusammenfassung**

Mobiltelefone sind aus der heutigen Gesellschaft nicht mehr wegzudenken. Nahezu jeder besitzt Eines und die meisten führen es ständig bei sich. Die Zielgruppe der Erfindung muss ein weiteres Gerät ständig bei sich tragen. Häufig ist jedoch das Feuerzeug des Rauchers riicht auffindbar.
Die Erfindung stellt die Verschrmelzung beider Geräte zu einem Gerät dar. Somit sucht ein Raucher, der ohnehin ständig sein Mobiltelefon bei sich trägt, nie mehr sein Feuerzeug.

## Beschreibung

Die Erfindung betrifft die Kombination der bereits vorhandenen Geräte Mobiltelefon und Feuerzeug. Eine solche Verschmelzung und Integration dieser zweier Einzelgeräte ist bislang einzigartig und neu.

Durch die Integration eines feuergebenden Gerätes (Feuerzeuges) in ein Mobiltelefon wird dem Raucher die Möglichkeit gegeben, sein Feuerzeug zusammen mit dem ohnehin mitgeführten Mobiltelefon stets bei sich zu tragen. Lästiges Suchen entfällt in der Regel, da die Beobachtung zeigt, dass auf ein kleines, preiswertes (Wegwerf-) Feuerzeug weit weniger Acht gegeben wird als auf ein Mobiltelefon, welches die ständige Erreichbarkeit in der modernen Gesellschaft symbolisiert und garantiert.

Die laufende Verringerung der Baugröße der Mobiltelefone hat inzwischen dazu geführt, dass die eigentliche Größe praktisch nur noch von der Bedienbarkeit, nicht mehr von den unterzubringenden Bauteilen bestimmt wird. Insbesondere diese Verkleinerung des notwendigen Raumes macht es erst heute sinnvoll möglich, die komplette Inteplementierung des Feuerzeugs in das Mobiltelefon zu realisieren. Es besteht heute kein Problem, in den winzig kleinen Mobiltelefonen Raum zu finden, um hier ein widerbefüllbares Mehrweg- oder austauschbares Einwegfeuerzeug in das Gehäuse zu integrieren.

Am Feuerzeug kann durch eine entsprechende Sicherung dafür gesorgt werden, ein unbeabsichtigtes Entzünden zu verhindern.
Ebenso ist es - wie bei herkömmlichen Feuerzeugen auch - möglich, durch die Art der Bedienung (Schwergängigkeit, etc) oder die Bauform (Verschlussdeckel, in das Gehäuse integrierter Piezozündtaster) eine unbeabsichtigte Entzündung zu verhindern.

Markttechnisch wird diese Erfindung bei mobiltelefonierenden Rauchem sehr gute Absatzmöglichkeiten finden.

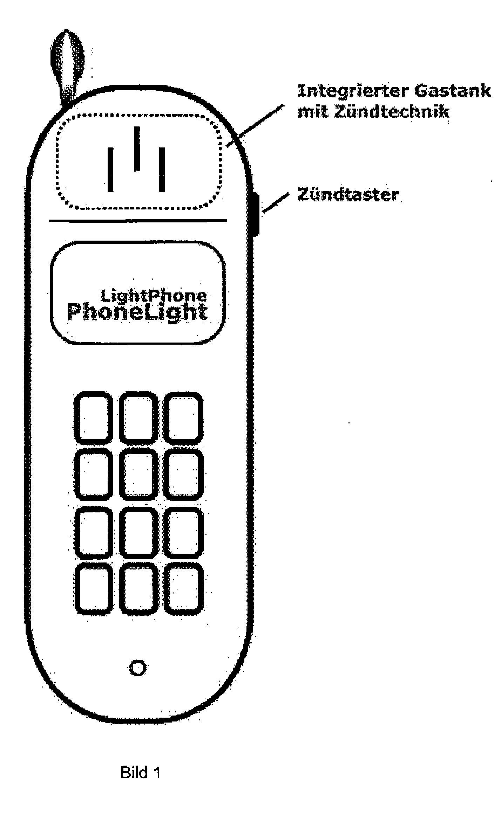

Bild 1 zeigt ein mögliches Modellbeispiel mit in die Oberseite des Mobiltelefons integriertem Feuerzeug.

## Patentansprüche

1. KOMBINATION VON MOBILTELEFON UND FEUERZEUG, **dadurch gekennzeichnet, dass** eine Implementierung eines feuergebenden Gerätes (Feuerzeug) in ein Mobiltelefon erfolgt.

2. KOMBINATION VON MOBILTELEFON UND FEUERZEUG, **dadurch gekennzeichnet, dass** das feuergebenden Gerät (Feuerzeug) gegen unbeabsichtigtes Entzünden bedienungs- oder bauartbedingt abgesichert ist.
